# EUROPEAN PATENT SPECIFICATION

(11) **EP 0 325 491 B1**
(45) Date of publication and mention of the grant of the patent: **26.05.1993**
(21) Application number: 89300580.1
(22) Date of filing: 20.01.1989
(51) Int. Cl.: G11B 7/00, G11B 20/18

(54) **Automatic gain control device for use in an optical memory device**
Vorrichtung zur automatischen Verstärkungskontrolle in einem optischen Speichergerät
Dispositif automatique de contrôle du rendement, à utiliser dans un système de mémorisation optique

(30) Priority: 22.01.1988 JP 13195/88
(43) Date of publication of application: 26.07.1989
(73) Proprietor: SHARP KABUSHIKI KAISHA, Osaka 545 (JP)
(72) Inventor: Fuji, Hiroshi, Kitakatsuragi-gun Nara-ken (JP); Maeda, Shigemi, Yamatokoriyama-shi Nara-ken (JP); Yamaguchi, Takeshi No. 202 Green Haitsu Wakakusa 4, Nara-shi Nara-ken (JP); Kojima, Kunio, Nara-shi Nara-ken (JP); Deguchi, Toshihisa No. C-722 Daiya-Haitsu, Nara-shi Nara-ken (JP); Terashima, Shigeo, Tenri-shi Nara-ken (JP)
(74) Representative: Brown, Kenneth Richard

(56) References cited:
- PATENT ABSTRACTS OF JAPAN, unexamined applications, P field, vol. 10, no. 334, November 13, 1986 THE PATENT OFFICE JAPANESE GOVERNMENT, page 24 P 515
- PATENT ABSTRACTS OF JAPAN, examined applications, P field, vol. 10, no. 127, May 13, 1986 THE PATENT OFFICE JAPANESE GOVERNMENT, page 130 P 455
- PATENT ABSTRACTS OF JAPAN, unexamined applications, P field, vol. 10, no. 361, December 4, 1986 THE PATENT OFFICE JAPANESE GOVERNMENT, page 157 P 523
- PATENT ABSTRACTS OF JAPAN, unexamined applications, P field, vol. 11, no. 72, March 5, 1987 THE PATENT OFFICE JAPANESE GOVERNMENT, page 46 P 554

## Description

The present invention relates to automatic gain control devices which control the playback signal levels in optical memory devices which record, playback, and erase information by irradiating an optical data storage medium with a light beam.

Magneto-optical memory devices which record information on a magneto-optical disk are one type of conventional optical memory device. Magneto-optical disks used in such devices are provided with a magnetic thin film that is easily magnetized along an axis in a direction perpendicular to the film surface. This enables information to be recorded as a magnetic orientation in a large number of minute areas.

To record information on a magneto-optical disk of this type, the magnetic thin film is irradiated with a focused laser beam with a diameter of, for example, approximately 1 micrometer. This raises the local temperature of that part of the thin film irradiated by the laser beam, dropping the coercive force and allowing the magnetic orientation of the film to be changed more easily. It is possible, therefore, to record or erase information at a point at which the local temperature has been raised by applying an external magnetic field to change the magnetic orientation to that desired.

To play back information recorded in this manner, the magnetic film is irradiated with a laser beam having a strength which will not cause the temperature to rise to the level necessary to allow the magnetic orientation to be changed easily. The plane of polarization of the linear polarized light reflected and transmitted from the magnetic film is rotated by the Faraday and Kerr effects. By detecting the transmitted and reflected light using an analyzer, and converting it into electrical signals, a pulse-type playback signal is obtained.

Normally, the signal level of this playback signal has a tendency to fluctuate due to variations in the playback conditions. Conventional optical memory devices provide an automatic gain control device to maintain the playback signal at a constant level.

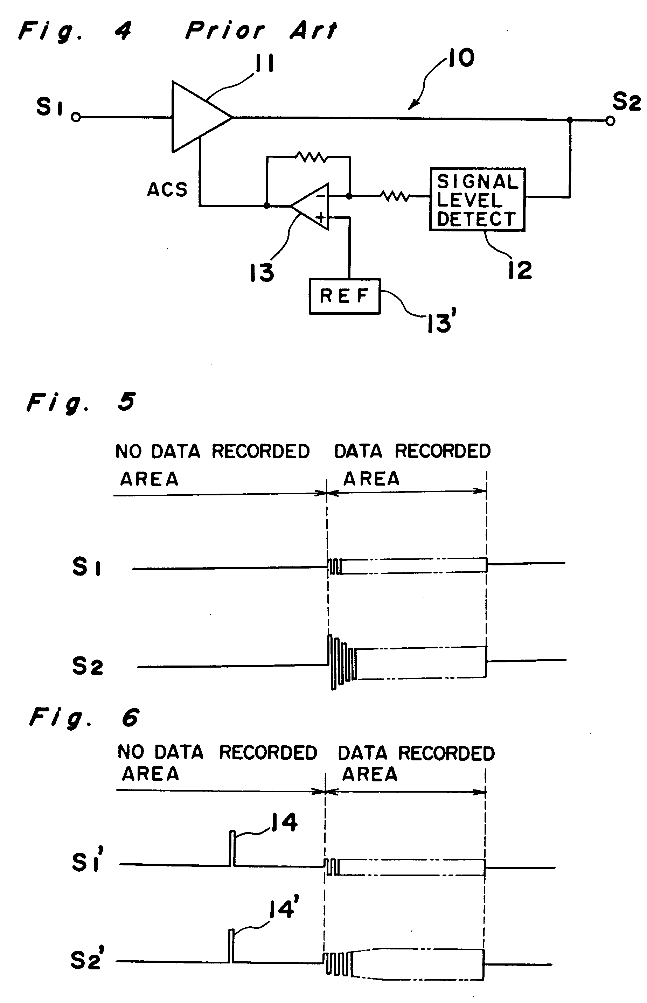

In Fig. 4, a conventional automatic gain control device 10 for use in the aforementioned type of optical memory device including a gain control amplifier 11 in which the amplification varies in response to the amplification control signal ACS is shown. A signal level detection circuit 12 outputs a voltage according to the level of the signal output by gain control amplifier 11. An operational amplifier 13 is also provided which compares the output signal level of gain control amplifier 11 detected by the signal level detection circuit 12 and a predetermined reference signal level from a reference signal generator 13'. The operational amplifier 13 outputs the amplification control signal ACS, which is fed back to the gain control amplifier 11 to maintain the playback signal level constant.

Data is not necessarily stored over the entire area in which recording is possible on the optical data storage medium. It is therefore possible that there are wide areas in which data is not recorded.

Accordingly, when the playback position is at a place on the magneto-optical disk where no data is recorded, the automatic gain control device 10 tries to respond to a LOW playback signal containing no pulse signal so that the amplification of the gain control amplifier 11 becomes excessively large. Under these circumstances, when signal playback from a data recorded area occurs again, the, amplifier is not able to respond to the new playback signal level immediately the playback signal containing pulse signals is applied to the gain control amplifier 11.

As shown in Fig. 5, the output signal S2 of the gain control amplifier 11 increases significantly in the period immediately after the input of the playback signal S1 containing the pulse signal. Normal playback signals cannot be obtained until the amplification once again tracks the playback signal level and accordingly attains a suitable amplification level.

Furthermore, if scratches or foreign matter are present on the surface of the optical data storage medium, the input signal S1' may contain a defective pulse 14 as shown in Fig. 6. In response to this defective pulse 14, the amplification of the gain control amplifier 11 becomes very low. A significantly longer period is required to return to normal amplification from this low amplification than to adjust from the excessive amplification in the aforementioned situation. Accordingly, after the defective pulse 14' has been played back, the output signal S2' of the gain control amplifier 11 drops significantly, and again, a normal playback signal is not obtained.

In the prior art automatic gain control devices for optical memory devices, the amplification and playback signal levels of the gain control amplifier 11 have a tendency to vary significantly due to the influence of unrecorded data areas, scratches, or foreign material on the optical data storage medium. This creates errors in the playback data, and reduces the reliability of the devices.

In order to solve the aforementioned problem, one possible solution may be to prerecord a dummy signal in front of an area in which data is recorded in order to allow sufficient time for the change in the amplification of the automatic gain control device 10 to respond before the recorded region is reached. This, however, wastes space that could be used to record data and, therefore, reduces the recording density possible, and the recording and playback speeds.

The present invention has been developed with a view to alleviating the above described problems and aims to provide an improved automatic gain control device for optical memory devices.

In accordance with the present invention, there is provided an automatic gain control device having a variable gain control amplifier for producing an amplified signal, the amplification of the gain of the variable gain control amplifier being responsive to an amplification control signal, and means for providing the amplification control signal based on the amplified signal **characterised in that** the amplification control signal providing means comprises:
means for providing a preparatory amplification control signal based on the amplified signal;
data detection means for detecting the presence of data in the amplified signal from the gain control amplifier and for producing a data present signal; and
sample-hold means for outputting the preparatory amplification control signal as the amplification control signal in response to the data present signal, holding the preparatory amplification control signal at the end of the data present signal, and outputting the held preparatory amplification signal as the amplification control signal in the absence of the data present signal.

When an area of an optical data storage medium on which data recorded data is played back by the aforementioned construction, the gain control amplifier is controlled in such a manner as to maintain the playback signal level of the information recorded on the optical data storage medium at a constant level by outputting an amplification control signal based on the difference between the output signal level of the gain control amplifier and a reference signal level, and feeding back this amplification control signal to the gain control amplifier.

Moreover, when an area of the optical data storage medium on which no data is recorded is played back, no signal is detected by the data detection means in the playback signal because the playback signal has become LOW.

Thus, the sample-hold means holds the amplification control signal immediately before the data becomes undetected according to the signal from the data detection means, specifically, the last amplification control signal output when the area to which data is recorded on the optical data storage medium was being played back. In other words, because the amplification of the gain control amplifier is held constant, the automatic gain control device responds to the LOW playback signal contained in the data and the amplification of the gain control amplifier does not become excessive.

Moreover, because the output signal level of the gain control amplifier does not become excessive when the playback position is at an area to which data is recorded on the optical data storage medium, a normal level playback signal can be obtained.

Furthermore, in the case in which a defect pulse is contained in the playback signal due to a scratch on the surface or foreign material on the surface of the optical data storage medium, the existence of a state in which a pulse continues for a specific time, and moreover data continuing for greater than a constant period, is not detected by the data detection means because such a defect pulse does not normally continue for longer than a constant period.

Therefore, the sample-hold means holds the amplification control signal level regardless of the presence of a direct pulse or the level of said pulse. Specifically, even if a defect pulse is generated, the automatic gain control device responds to the defect pulse and the amplification of the gain control amplifier does not become excessively low.

Moreover, because the output signal level of the gain control amplifier does not decrease significantly, it is therefore possible to reliably obtain a playback signal of a normal level.

Therefore, it is possible to prevent significant variations in the playback signal level, the creation of errors in the playback information, and decreased reliability due to the influences of scratches and areas of unrecorded information on the optical data storage medium. Moreover, because it is not necessary to provide wasteful recorded areas, effective reductions in the recording density, and recording and playback speed are not invited.

These and other objects and features of the present invention will become apparent from the following description taken in conjunction with a preferred embodiment thereof with reference to the accompanying drawings, throughout which like parts are designated by like reference numerals, and in which:
Fig. 1 shows a block diagram of an automatic gain control device, according to the present invention;
Fig. 2 is a block diagram showing a specific sample configuration of a pulse train detection circuit and hold circuit shown in Fig. 1;
Fig. 3 is a graph showing waveforms of the signals at specific parts of the automatic gain control device of Figs. 1 and 2, showing cases where unrecorded data areas and recorded data areas on the optical data storage medium are played back.
Fig. 4 is a block diagram of an automatic gain control device, according to the prior art; and
Figs. 5 and 6 are graphs showing waveforms of the signals obtained at input and output of the automatic gain control device of Fig. 4.

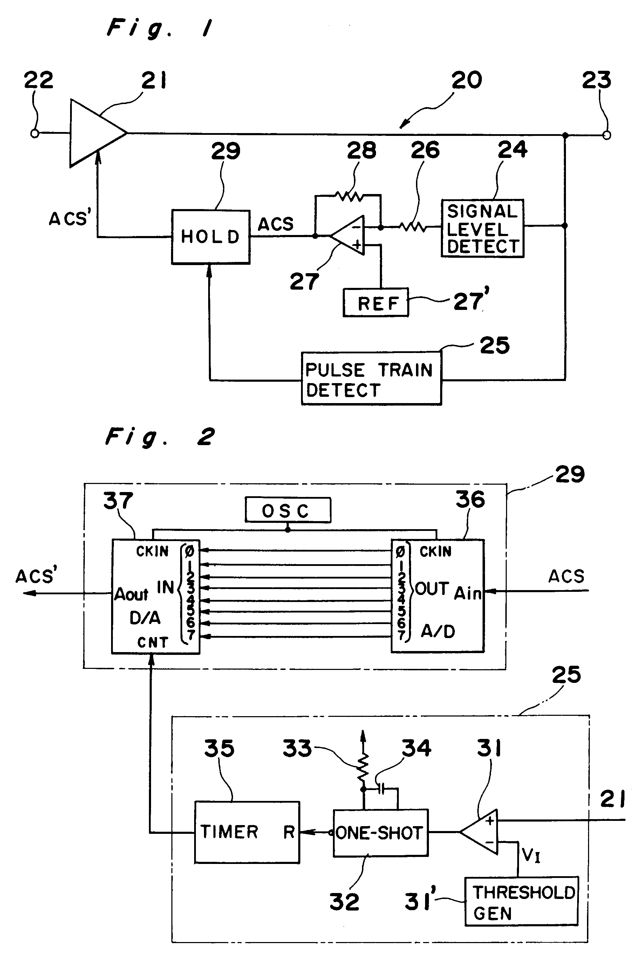

Referring to Fig. 1, an automatic gain control device 20 according to the present invention is shown. The automatic gain control device 20 is provided with a gain control amplifier 21 in which the amplification varies in response to an amplification control signal ACS'. The playback signal reproduced from an optical data storage medium such as a magneto-optical disk (not shown) is input to the gain control amplifier 21 through an input terminal 22.

The output signal of the gain control amplifier 21 is output to the exterior through an output terminal 23. Input to a pulse train detection circuit 25, which detects when a pulse in the output signal of gain control amplifier 21 continues for a specified period greater than a predetermined time length. The output signal of the gain control amplifier 21 is also input to a signal level detection circuit 24, which outputs a voltage signal according to the output signal level of the gain control amplifier 21.

The signal level detection circuit 24 is connected to the inverting input of an operational amplifier 27 through a resistor 26. The inverting input of operational amplifier 27 is further connected to the output terminal of the operational amplifier 27 through a resistor 28. Furthermore, a predetermined reference signal obtained from a reference signal generator 27' is applied to the non-inverting input of the operational amplifier 27. Thus, the operational amplifier 27 produces an amplification control signal ACS which is proportional to the difference between the reference signal and the output signal of the gain control amplifier 21 as detected by the aforementioned signal level detection circuit 24.

The output terminal of the operational amplifier 27 is connected to a hold circuit 29. During detection of the pulse train by a pulse train detection circuit 25, the signal ACS from the operational amplifier 27 is passed through the hold circuit 29 and fed directly back to the gain control amplifier 21 as the amplification control signal ACS'. On the other hand, when no pulse train is detected by the pulse train detection circuit 25, the hold circuit 29 feeds back a latched signal to the gain control amplifier 21 as the amplification control signal ACS'. The latched signal is an amplification control signal ACS obtained from the operational amplifier 27 during the presence of the pulse train.

The pulse train detection circuit 25 and the hold circuit 29 will be described in detail below in connection with Fig. 2.

Referring to Fig. 2, the pulse train detection circuit 25 includes a comparator 31 having a non-inverting input for receiving the output signal of gain control amplifier 21 and an inverting input for receiving a threshold V1 from a threshold generator 31'. The comparator 31 receives the output signal of the gain control amplifier 21 and converts it to a binary signal by outputting a HIGH or LOW level signal when the output signal of gain control amplifier 21 is greater or less than the pulse discrimination threshold V1, respectively.

The output terminal of the aforementioned comparator 31 is connected to a trigger input terminal of a one-shot multivibrator 32, which is triggered by the step up of the output signal from the comparator 31 and generates a negative logic pulse signal having a pulse width T1 determined by the time constant defined by a resistor 33 and a capacitor 34. Furthermore, the one-shot multivibrator 32 is so arranged as to continuously produce the LOW level signal when the next trigger signal is input within the pulse holding period T1 until the time constant T1 passes from the input time of the following trigger signal.

The pulse train detection circuit 25 further includes a timer 35 having its reset terminal connected to the output terminal of the one-shot multivibrator 32, and its output connected to the hold circuit 29. Therefore, a HIGH level signal output from timer 35 is indicative of the presence of data in the playback signal continuing for a period greater than a predetermined time length T2. The timer circuit 35 starts to count in response to a LOW level signal applied to the reset terminal, and produces a HIGH level signal when it has counted greater than a predetermined time length T2, and thereafter, produces a LOW level signal in response to a HIGH level signal applied to the reset terminal.

The hold circuit 29 includes an analog/digital converter 36 which has an input Ain for receiving signal ACS from the operational amplifier 27 and has eight parallel outputs for producing a digital signal. The hold circuit 29 also includes a digital/analog converter 37 which has eight inputs for receiving a digital signal from the A/D converter 36 and an output Aout for producing an analog form amplification control signal ACS' which is applied to the gain control amplifier 21. The D/A converter 37 further has a CNT input for receiving the output signal from the timer 35. The A/D converter 36 and the D/A converter 37 are operated in synchronicity by clock pulses produced from an oscillator OSC.

Thus, when the A/D converter 36 receives the analog form amplification control signal ACS from the operational amplifier 27, it converts the signal ACS to 8-bit digital data which is applied to the D/A converter 37.

In the D/A converter 37, when the signal from the timer 35 is HIGH, the 8-bit digital data is converted to analog form and is produced from the output Aout as the amplification control signal ACS'. Then, when the signal from the timer 35 changes from HIGH to LOW, the D/A converter 37 stops D/A conversion and latches the binary data obtained at that moment from the A/D converter 36. It holds the data in analog form and continues to produce the latched analog signal ACS' as long as the signal from the timer 35 is maintained LOW.

Accordingly, when the output signal from the timer 35 is HIGH, the D/A converter 37 converts the digital signal from the A/D converter 36 to an analog signal and outputs the converted analog signal as the amplification control signal ACS' to the gain control amplifier 21. On the contrary, when the output signal from the timer 35 becomes LOW, the D/A converter 37 latches the digital signal from the A/D converter 36 which is obtained immediately before the signal from the timer 35 changes to a LOW level signal, and thereafter, the D/A converter 37 produces an analog signal based on the latched digital signal as the amplification control signal ACS'.

It is noted that the embodiment shown in Fig. 2 employs a digital sample-hold circuit 37, but this can be replaced with an analog sample-hold circuit using a capacitor. However, it is preferable to use the digital sample-hold circuit as shown, particularly when the holding time is long, because the data held in a digital sample-hold circuit can be maintained without any change, but with an analog sample-hold circuit, the data held may vary due to discharge of the capacitor.

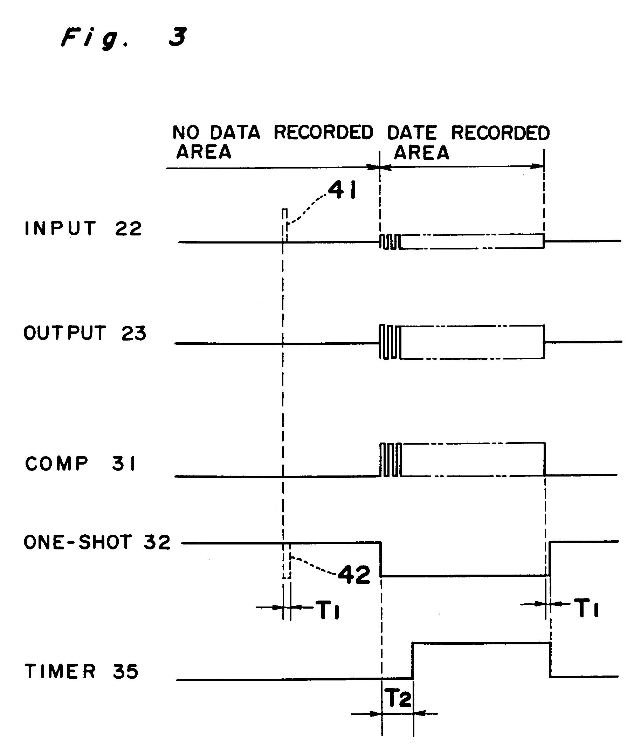

In operation, when an area of the optical data storage medium on which no data is recorded is reproduced, a playback signal containing no pulse, as shown by a real line in Fig. 3, first row, left half, is applied to the gain control amplifier 21. In this case, the gain control amplifier 21 produces a LOW level signal from the output 23, as shown in Fig. 3, second row, left half.

In this case, since the output signal from the gain control amplifier 21 is continuously LOW, the comparator 31 continuously produces a LOW level signal. Thus, the one-shot multivibrator 32 continues to produce a HIGH level signal and thus, the timer 35 maintains a LOW level signal.

In this case, the D/A converter 37 produces the amplification control signal ACS' based on the latched digital signal which has been latched from the A/D converter 36 immediately before the output signal from the timer 35 has changed from a HIGH to a LOW level signal in the previous operation. In other words, the hold circuit 29 generates the amplification control signal ACS' based on the signal ACS obtained from the operational amplifier 27 at the end of the detection of the previous pulse train, i.e. the amplification control signal ACS latched in response to the signal from the pulse train detection circuit 25 when the previous area of recorded data was replayed.

Thus, the amplification of the gain control amplifier 21 is maintained constant so that even if the automatic gain control device 20 responds to a LOW play-back signal which does not contain a pulse signal, the amplification of the gain control amplifier 21 is not excessive.

Thereafter, when an area of the optical storage medium on which data is recorded is played back, the comparator 31 produces a pulse train. Since the period T1 is selected to be greater than the pulse repetition interval of the playback pulse train, the one-shot multivibrator 32 continues to produce a LOW level signal from its output during a pulse train from the comparator 31. The leading edge of the LOW level signal from the one-shot multivibrator 32 coincides with the leading edge of the first pulse of the pulse train from the comparator 31, and the trailing edge of the same coincides with the termination of the period T1 counted from the leading edge of the last pulse of the pulse train.

After counting the period T2 from the leading edge of the LOW level signal from the one-shot multivibrator 32, the timer 35 produces a HIGH level signal which is applied to the D/A converter 37. The HIGH level signal from the timer 35 continues until the end of the LOW level signal from the one-shot multivibrator 32. In other words, the output from the timer 35 changes from HIGH to LOW in response to the trailing edge of the negative going pulse from the one-shot multivibrator 32.

Before the timer 35 produces the HIGH level signal, the D/A converter 37 produces the amplification control signal ACS' based on the latched data obtained when the previous recorded data was replayed.

Then, when the timer 35 produces the HIGH level signal, i.e., when the period T2 elapses after the playback position on the optical data storage medium moves to an area on which data is recorded, the digital signal sent from the A/D converter 36 is sequentially converted to an analog signal by the D/A converter 37 and the converted analog signal is produced as the amplification control signal ACS' for use in the gain control amplifier 21. In other words, when the timer 35 produces a HIGH level signal, the D/A converter 37 outputs the amplification control signal ACS' based on the difference between the currently obtained output signal from the gain control amplifier 21 and the reference signal level. Accordingly, the playback signal of the information recorded on the optical data storage medium is controlled to have a constant level.

In this way, during the period T2 after the beginning of the pulse train, the amplification control signal ACS' based on the latched data obtained when the previous data was replayed is used. Thus, when the period T2 elapses, the amplification of the gain control amplifier 21 rapidly reaches the optimum amplification, and the output signal level of the gain control amplifier 21 does not rise significantly.

Furthermore, according to the present invention, the amplification control signal ACS' continues to be fed back to the gain control amplifier 21 until the period T1 elapses after the last pulse signal in the playback pulse train rises. This causes no problem, however, as the time constant T1 of the one-shot multivibrator 32 is sufficiently short with respect to the response time of the gain control amplifier 21.

A defect pulse 41 such as that shown by the dotted line in Fig. 3, for example, may be generated during playback of the optical data storage medium due to scratches or foreign material on the surface of the optical data storage medium. This will not adversely affect the amplification of the gain control amplifier 21 when data recorded on the optical data storage medium is being replayed, for the reasons explained below.

The defect pulse 41 is input as the trigger signal to the one-shot multivibrator 32 after it has been amplified by the gain control amplifier 21 and binary converted by the comparator 31. Thus, the one-shot multivibrator 32 outputs a negative logic pulse 42 of time width T1.

However, because such a defect pulse 41 does not normally continue for longer than the predetermined time period T2, the timer 35 does not operate to produce a HIGH level signal, but continues to produce the LOW level signal. Thus, even if a negative logic pulse 42 is input, the hold circuit 29 continues to hold the amplification control signal ACS' based on the latched data. In other words, even if a defect pulse 41 is generated, the automatic gain control device 20 will not respond to this defect pulse 41, and thus the amplification of the gain control amplifier 21 will not become excessively low.

Thus, in the above situation, because the output signal level of the gain control amplifier 21 does not drop significantly, a normal playback signal can, naturally, be reliably obtained.

It is to be noted that according to the present invention, the hold circuit 29 is inserted between the operational amplifier 27 and the gain control amplifier 21, but it may also be inserted between, for example, the signal level detection circuit 24 and the operational amplifier 27. According to this modification, a constant amplification control signal can be applied to the gain control amplifier 21 by latching the signal produced from the signal level detection circuit 24.

Furthermore, the one-shot multivibrator 32 is not restricted to a pulse generator for generating a pulse having a pulse width determined by the time constant T1 defined by the resistor 33 and the capacitor 34, but may, for example, be a one-shot pulse generator comprised of a counter circuit and a clock signal source.

In addition, the hold circuit 29 is not restricted to a means comprised of the A/D converter 36 and the D/A converter 37, but means comprising, for example, a voltage/frequency converter and a frequency/voltage converter, or an analog sample holding circuit may also be used.

Moreover, if the comparator 31 in the pulse train detection circuit 25 is, for example, used in common with the comparator which is connected to the automatic gain control device 20 and provided in a processing circuit which digitally processes the signal played back from the optical data storage medium, manufacturing costs can be reduced.

Therefore, in an automatic gain control device for optical memory devices according to the present invention, significant variations in the playback signal level caused by the influence of scratches or areas of unrecorded data on the optical data storage medium can be reliably prevented.

Moreover, because wasted recorded areas are not necessary, no reduction in recording density, or recording or playback speed will take place.

## Claims

1. An automatic gain control device having a variable gain control amplifier (21) for producing an amplified signal, the amplification of the gain of the variable gain control amplifier being responsive to an amplification control signal (ACS') and means (24-29) for providing the amplification control signal (ACS') based on the amplified signal **characterised in that** the amplification control signal providing means (24-29) comprises:
means (24, 26, 27, 27' 28, 29) for providing a preparatory amplification control signal (ACS) based on the amplified signal;
data detection means (25) for detecting the presence of data in the amplified signal from the gain control amplifier and for producing a data present signal; and
sample-hold means (29) for outputting the preparatory amplification control signal (ACS) as the amplification control signal (ACS') in response to the data present signal, holding the preparatory amplification control signal (ACS) at the end of the data present signal, and outputting the held preparatory amplification signal (ACS) as the amplification control signal (ACS') in the absence of the data present signal.

2. An automatic gain control device according to claim 1 wherein the data detection means (25) comprises a pulse train detection circuit (25) for detecting a pulse train that continues for longer than a predetermined time (T2), and wherein the data present signal begins the predetermined time (T2) after the detection of a first pulse in the pulse train, and ends after the detection of the last pulse in the pulse train.

3. An automatic gain control device according to claim 2 wherein the pulse train detection circuit (25) comprises timer means (35) for producing the data present signal after a delay of the predetermined time (T2) from the detection of data in the amplified signal and ending the data present signal on detection of the end of data in the amplified signal.

4. An automatic gain control device according to any one of claims 1 to 3 wherein the data detection means (25) comprises:
a comparator (31) for comparing said amplified playback signal with a predetermined threshold level for producing a pulse train; and
a one-shot multivibrator (32) for generating a pulse train detection signal during the presence of said pulse train.

5. An automatic gain control device according to any one of claims 1 to 4 wherein the means (29) providing the amplification control signal (ACS') comprises:
an analog to digital converter (36) for converting said preparatory amplification control signal (ACS) to a digital signal; and
a digital to analog converter (37) for converting said digital preparatory amplification control signal to an analog signal.

6. An automatic gain control device according to any one of claims 1 to 5 wherein the means (24, 26 27, 27', 28, 29) for providing a preparatory amplification control signal (ACS) comprises a reference signal generator (27') and an amplifier (27) and wherein the preparatory amplification control signal (ACS) is provided based on the output of the gain control amplifier (21) and a reference signal generated by the reference signal generator (27')

## Patentansprüche

1. Vorrichtung zur automatischen Verstärkungsregelung mit einem verstärkungsvariablen Regelverstärker (21) zum Erzeugen eines verstärkten Signals, wobei die Vergrößerung der Verstärkung des Regelverstärkers auf ein Verstärkungsregelsignal (ACS') anspricht, und Mitteln (24-29) zum Bereitstellen des Verstärkungsregelsignals (ACS') basierend auf dem verstärkten Signal, **dadurch gekennzeichnet,** daß die das Verstärkungsregelsignal bereitstellende Einrichtung (24-29) folgende Einrichtungen umfaßt:
Mittel (24, 26, 27, 27', 28, 29) zum Bereitstellen eines vorbereitenden Verstärkungsregelsignals (ACS) basierend auf dem verstärkten Signal;
Datendetektoreinrichtung (25) zum Ermitteln der Anwesenheit von Daten in dem verstärkten Signal aus dem Verstärkungsregelverstärker und zum Erzeugen eines 'Daten vorhanden'-Signals; und
Abtast- und Halteeinrichtung (29) zum Ausgeben des vorbereitenden Verstärkungsregelsignals (ACS) als das Verstärkungsregelsignal (ACS') als Reaktion auf das 'Daten vorhanden'-Signal, Halten des vorbereitenden Verstärkungsregelsignals (ACS) am Ende des 'Daten vorhanden'-Signals, und Ausgeben des gehaltenen vorbereitenden Verstärkungssignals (ACS) als das Verstärkungsregelsignal (ACS') bei der Abwesenheit des 'Daten vorhanden'-Signals.

2. Vorrichtung zur automatischen Verstärkungsregelung nach Anspruch 1, in der die Datendetektoreinrichtung (25) einen Pulsfolge-Detektorkreis (25) zum Ermitteln einer Impulsfolge, die länger als eine vorgegebene Zeit (T2) andauert, umfaßt, und worin das 'Daten vorhanden'-Signal die vorgegebene Zeit T2 nach Erkennen eines ersten Impulses in der Pulsfolge beginnt und nach Erkennen des letzten Impulses in der Pulsfolge endet.

3. Vorrichtung zur automatischen Verstärkungsregelung nach Anspruch 2, in welcher der Pulsfolge-Detektorkreis (25) eine Taktgebereinrichtung (35) zum Erzeugen des 'Daten vorhanden'-Signals nach einer Verzögerung von einer vorgegebenen Zeit (T2) von der Erkennung von Daten in dem verstärkten Signal und Beenden des 'Daten vorhanden'-Signals bei Erkennung des Endes der Daten in dem verstärkten Signal umfaßt.

4. Vorrichtung zur automatischen Verstärkungsregelung nach einem der Ansprüche 1 bis 3, in der die Datendetektoreinrichtung (25) umfaßt;
einen Komparator (31) zum Vergleichen des verstärkten Wiedergabesignals mit einem vorgegebenen Schwellwertpegel zum Erzeugen einer Pulsfolge; und
einen monostabilen Multivibrator (32) zum Erzeugen eines Pulsfolgeermittlungssignals während der Anwesenheit der Impulsfolge.

5. Vorrichtung zur automatischen Verstärkungsregelung nach einem der Ansprüche 1 bis 4, in der die Einrichtung (29), welche das Verstärkungsregelsignal (ACS') bereitstellt, umfaßt;
einen Analog/Digitalwandler (36) zum Umwandeln des vorbereitenden Verstärkungsregelsignals (ACS) in ein Digitalsignal; und
einen Digital/Analogwandler (37) zum Umwandeln des digitalen vorbereitenden Verstärkungsregelsignals in ein Analogsignal.

6. Vorrichtung zur automatischen Verstärkungsregelung nach einem der Ansprüche 1 bis 5, in der die Mittel (24, 26, 27, 27', 28, 29) zum Bereitstellen eines vorbereitenden Verstärkungsregelsignals (ACS) einen Referenzsignalgenerator (27') und einen Verstärker (27) umfassen, und in der das vorbereitende Verstärkungsregelsignal (ACS) auf der Basis des Ausgangs des Regelverstärkers (21) und einem von dem Referenzsignalgenerator (27') erzeugten Referenzsignal bereitgestellt wird.

## Revendications

1. Dispositif de commande automatique de gain ayant un amplificateur à commande de gain variable (21) pour produire un signal amplifié, l'amplification du gain de l'amplificateur à commande de gain variable étant sensible à un signal de commande d'amplification (ACS'), et des moyens (24 à 29) pour fournir le signal de commande d'amplification (ACS') sur la base du signal amplifié, caractérisé en ce que les moyens de fourniture de signal de commande d'amplification (24 à 29) comprennent:
des moyens (24, 26, 27, 27', 28, 29) pour fournir un signal de commande d'amplification préparatoire (ACS) sur la base du signal amplifié;
des moyens de détection de données (25) pour détecter la présence de données dans le signal amplifié en provenance de l'amplificateur à commande de gain et pour produire un signal de présence de données; et
des moyens d'échantillonnage et de maintien (29) pour délivrer en sortie le signal de commande d'amplification préparatoire (ACS) en tant que signal de commande d'amplification (ACS') en réponse au signal de présence de données, maintenir le signal de commande d'amplification préparatoire (ACS) à la fin du signal de présence de données, et délivrer en sortie le signal de commande d'amplification préparatoire (ACS) en tant que signal de commande d'amplification (ACS') en l'absence du signal de présence de données.

2. Dispositif de commande automatique de gain selon la revendication 1, dans lequel les moyens de détection de données (25) comprennent un circuit de détection de train d'impulsions (25) pour détecter un train d'impulsions qui dure plus longtemps qu une période prédéterminée (T2), et dans lequel le signal de présence de données commence au bout d'une période prédéterminée (T2) à compter de la détection d'une première impulsion du train d'impulsions, et finit après la détection de la dernière impulsion du train d'impulsions.

3. Dispositif de commande automatique de gain selon la revendication 2, dans lequel le circuit de détection de train d'impulsions (25) comprend des moyens formant minuterie (35) pour produire le signal de présence de données après un retard de la période prédéterminée (T2) à compter de la détection de données dans le signal amplifié et mettre fin au signal de présence de données au moment de la détection de la fin de données dans le signal amplifié.

4. Dispositif de commande automatique de gain selon l'une quelconque des revendications 1 à 3, dans lequel les moyens de détection de données (25) comprennent:
un comparateur (31) pour comparer ledit signal de reproduction amplifié à un niveau de seuil prédéterminé pour produire un train d'impulsions; et
un multivibrateur monostable (32) pour générer un signal de détection de train d'impulsions pendant la présence dudit train d'impulsions.

5. Dispositif de commande automatique de gain selon l'une quelconque des revendications 1 à 4, dans lequel les moyens (29) fournissant le signal de commande d'amplification (ACS') comprennent:
un convertisseur analogique-numérique (36) pour convertir ledit signal de commande d'amplification préparatoire (ACS) en un signal numérique; et
un convertisseur numérique-analogique (37) pour convertir ledit signal de commande d'amplification préparatoire numérique en un signal analogique.

6. Dispositif de commande automatique de gain selon l'une quelconque des revendications 1 à 5, dans lequel les moyens (24, 26, 27, 27', 28, 29) pour fournir un signal de commande d'amplification préparatoire (ACS) comprennent un générateur de signaux de référence (27') et un amplificateur (27) et dans lequel le signal de commande d'amplification préparatoire (ACS) est fourni sur la base de la sortie de l'amplificateur à commande de gain (21) et d'un signal de référence généré par le générateur de signaux de référence (27').
